Europäisches Patentamt

European Patent Office

Office européen des brevets

(11) Numéro de publication: **0 037 748**
A1

# (12) DEMANDE DE BREVET EUROPEEN

(21) Numéro de dépôt: **81400292.9**

(22) Date de dépôt: **26.02.81**

(51) Int. Cl.³: **B 65 G 15/58**
**B 65 G 17/46**

(30) Priorité: **03.03.80 FR 8004673**

(43) Date de publication de la demande:
**14.10.81 Bulletin 81/41**

(84) Etats contractants désignés:
**DE GB IT SE**

(71) Demandeur: **Patin, Pierre**
**15, rue Buffon**
**F-75005 Paris(FR)**

(72) Inventeur: **Patin, Pierre**
**15, rue Buffon**
**F-75005 Paris(FR)**

(74) Mandataire: **Plagne, Jean**
**c/o RATP(Brevets) 53 ter, Quai des Grands-Augustins**
**F-75006 Paris(FR)**

(54) **Perfectionnement aux dispositifs d'entraînement par aimants permanents.**

(57) La présente invention concerne l'entraînement d'éléments mobiles, indépendants ou reliés entre eux, au moyen d'aimants permanents solidaires de ceux-ci.

Le dispositif d'entraînement selon l'invention consiste en un tapis entraîné par deux tambours (2 et 3) et constitué d'une bande (1) en matériau supportant l'enroulement sur les tambours et l'effort global d'entraînement et de barrettes (6) en matériau ferromagnétique disposées transversalement sur la face externe de la bande, les éléments mobiles (4) à entraîner comportant, sur leur face en regard avec la bande, des blocs (5) en matériau à aimantation permanente.

Un tel dispositif est applicable pour l'entraînement de tout élément mobile suivant une trajectoire donnée; par exemple dans le domaine de la manutention de marchandise ou celui du transport des personnes.

FIG.1

EP 0 037 748 A1

- 1 -

<u>Perfectionnement aux dispositifs d'entraînement par aimants permanents</u>

La présente invention concerne l'entraînement d'éléments mobiles, au moyen d'aimants permanents.

Il est connu de disposer sous les éléments mobiles, un matériau à aimantation permanente, venant se plaquer contre un tapis en matériau ferromagnétique tendu entre deux tambours qui lui transmettront l'effort nécessaire à l'entraînement.

Mais il s'avère que la réalisation de ce tapis en matériau ferromagnétique pose des problèmes car il doit à la fois être d'une part suffisamment épais pour permettre un bouclage correct des lignes de force magnétiques et présenter une résistance à la rupture compatible avec les efforts à transmettre, et d'autre part être mince pour limiter les contraintes et la fatigue dues à son enroulement sur les tambours.

Lorsqu'un tel compromis n'existe pas, cette solution n'est pas applicable, c'est pourquoi la présente invention a pour objet un dispositif d'entraînement d'éléments mobiles munis de matériau à aimantation permanente venant se plaquer contre un tapis comprenant un matériau ferromagnétique et tendu entre deux tambours qui lui transmettent l'effort d'entraînement, caractérisé par le fait que ledit tapis est constitué d'une bande formant une boucle sans fin et réalisée de manière à supporter l'effort global d'entraînement et les contraintes d'enroulement sur les tambours, et de barrettes en matériau ferromagnétique solidaires de la face extérieure de ladite bande, disposées transversalement à celle-ci et de largeur telle qu'elles ne s'opposent pas au bon enroulement de la bande sur les rouleaux.

Avantageusement, ladite bande est en matériau caoutchouteux renforcé par des armatures et lesdites barrettes y sont solidarisées par vulcanisation.

Dans un mode préféré de réalisation, ledit tapis est utilisé en combinaison avec des éléments mobiles dont le matériau à aimantation permanente est contitué par des aimants permanents à concentration de flux plats à champ transversal, lesdites plaques étant disposées orthogonalement auxdites barrettes du tapis.

D'autres caractéristiques de la présente invention apparaîtront à l'étude de l'exemple de réalisation donné ci-après à titre illustratif et nullement limitatif en regard du dessin annexé dans lequel :

- la figure 1 est une vue d'ensemble schématique du dispositif d'entraînement ;

- la figure 2 représente un mode de réalisation avec des blocs magnétiques à concentration de flux.

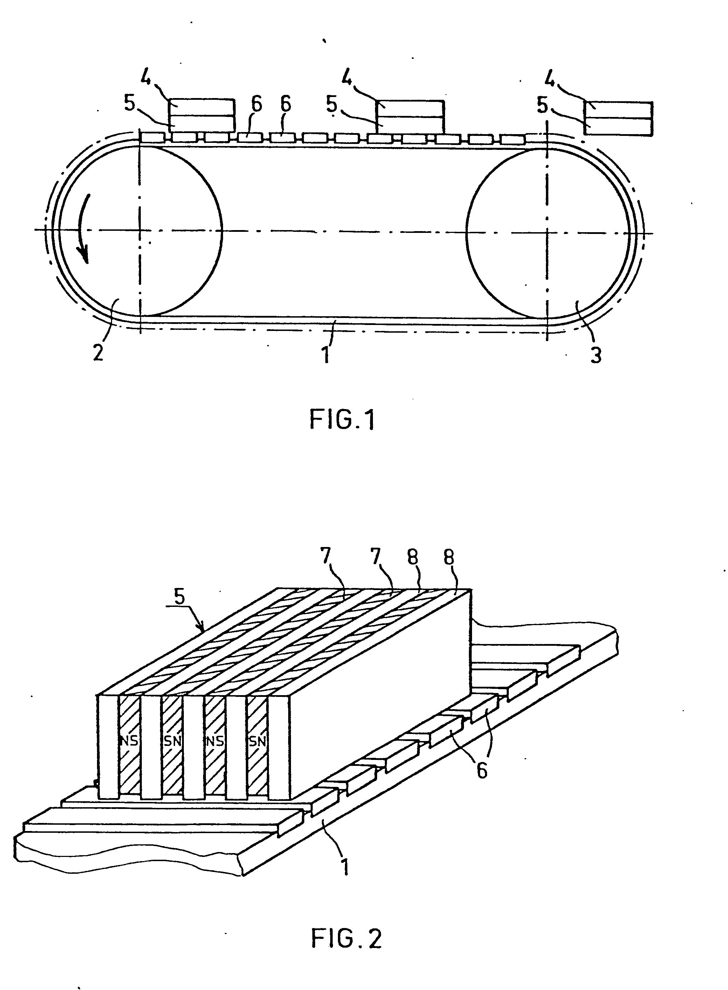

Le dispositif d'entraînement magnétique représenté à la figure 1 comporte une bande 1 formant une boucle fermée, montée sur deux tambours 2 et 3 dont l'un est entraîné en rotation par tout moyen connu.

Les éléments mobiles 4 comportent sur leur face en regard avec la bande 1, des blocs 5 en matériau à aimantation permanente. Ils sont guidés, par tout moyen connu non représenté, suivant une trajectoire telle que les blocs 5 sont tangents à l'un des brins rectilignes de la bande 1.

La bande 1 comporte, sur sa face externe, des barrettes 6 en matériau ferromagnétique, disposées transversalement à celle-ci. L'épaisseur des barrettes est déterminée par le flux magnétique fourni par les blocs 5 de manière à obtenir l'effort d'attraction maximal, et par là, compte tenu du coefficient de frottement entre les blocs et les barrettes, un effort tangentiel d'entraînement maximal.

Les barrettes 6 sont solidarisées avec la bande 1 par tout moyen convenant à cet effet. Par exemple, lorsque la bande est en matériau caoutchouteux, elles peuvent être vulcanisées. Dans .d'autres cas, un collage approprié est également envisageable.

Les barrettes 6 ne sont pas jointives pour permettre l'enroulement de la bande 1 sur les tambours 2 et 3. En effet, il est connu que, lors de l'enroulement, seule la fibre neutre de la bande a une longueur constante tandis que la surface extérieure s'allonge ; or les barrettes s'opposant à cet allongement, il est nécessaire de prévoir entre chacune d'elles des intervalles où se concentrent les allongements. Il s'en suit une répartition entre la largeur des barrettes et les intervalles qui dépend des propriétés élastiques du matériau constituant la bande et du diamètre d'enroulement, selon des lois mécaniques bien connues. A titre d'exemple, une réalisation a été expérimentée avec des barrettes larges de 4 mm et séparées de 1 mm, pour une bande en matériau caoutchouteux de 10 mm d'épaisseur et des tambours de 500 mm de diamètre.

Dans un dispositif d'entraînement selon l'invention, la partie en matériau ferromagnétique de la bande n'étant pas continue, chaque barrette 6 transmet à la bande 1 un effort élémentaire et c'est cette dernière qui, en les regroupant, supporte l'effort global d'entraînement. Pour cela, elle est pourvue d'armatures, selon des modes de réalisation parfaitement connus.

La bande telle que décrite ci-dessus est avantageusement combinée avec des blocs magnétiques 5 à concentration de flux tels que représentés à la figure 2. Ceux-ci se composent d'un empilage alterné de plaques en matériau à aimantation permanente 7 et de plaques en matériau ferromagnétique 8. Les plaques aimantées 7 sont polarisées "N" "S" dans le sens de leur épaisseur et disposées de manière telle que deux faces "S" ou "N" soient en contact avec une même plaque ferromagnétique 8. Il s'en suit une concentration de champs alternativement "N" et "S" sur les plaques 8 successives, ce qui permet d'atteindre une densité importante de force d'attraction par unité de surface. En outre, il est avantageux de disposer les plaques 7 et 8 du bloc magnétique 5 orthogonalement aux barrettes 6, afin de permettre un bouclage des lignes de champ sans entrefer entre les plaques 8 successives.

Le dispositif décrit ci-dessus est applicable pour l'entraînement de tout élément mobile suivant une trajectoire donnée. Il peut s'agir d'éléments indépendants les uns des autres ou d'éléments liés entre eux de manière à se présenter avec un pas sensiblement constant. De ce fait, le champ d'application du dispositif d'entraînement est très vaste et comprend notamment le domaine de la manutention de marchandise et celui du transport des personnes.

00037748

- 4 -

REVENDICATIONS

1 - Dispositif d'entraînement d'éléments mobiles (4) munis de matériau
à aimantation permanente (5) venant se plaquer contre un tapis (1)
comprenant un matériau ferromagnétique et tendu entre deux tambours
(2 et 3) qui lui transmettent l'effort d'entraînement, caractérisé par
le fait que ledit tapis (1) est constitué d'une bande formant une boucle
sans fin et réalisée de manière à supporter l'effort global d'entraînement et les contraintes d'enroulement sur les tambours, et de barrettes
(6) en matériau ferromagnétique solidaires de la face extérieure de
ladite bande, disposées transversalement à celle-ci et de largeur telle
qu'elles ne s'opposent pas au bon enroulement de la bande sur les tambours.

2 - Dispositif d'entraînement selon la revendication 1 caractérisé par le
fait que ladite bande est en matériau caoutchouteux renforcé par des
armatures et lesdites barrettes y sont solidarisées par vulcanisation.

3 - Dispositif d'entraînement selon l'une des revendications 1 et 2,
caractérisé par le fait que ledit tapis (1) est utilisé en combinaison
avec des éléments mobiles dont le matériau à aimantation permanente (5)
est constitué par des aimants permanents à concentration de flux comprenant, en alternance, des plaques ferromagnétiques (8) et des aimants
plats à champ transversal (7).

4 - Dispositif d'entraînement selon la revendication 3, caractérisé par
le fait que lesdites plaques (8) sont disposées orthogonalement auxdites
barrettes (6) du tapis.

FIG.1

FIG.2

# 0037748

Numéro de la demande

**Office européen des brevets**

## RAPPORT DE RECHERCHE EUROPEENNE

EP 81 40 0292

| Catégorie | Citation du document avec indication, en cas de besoin, des parties pertinentes | Revendication concernée |
|---|---|---|
| A | FR - A - 2 342 918 (PATIN)<br><br>* Revendications 1,4; figures 1-4 *<br><br>-- | 1 |
|  | FR - A - 2 061 528 (ASCENSEURS-ROUX-COMBALUZIER)<br><br>* Page 1, lignes 29-34; figures *<br><br>-- | 1 |
|  | DE - A - 2 446 911 (STAHLBAU)<br><br>* Page 3, lignes 22-26; page 4, lignes 1-2; figures 1,2 *<br><br>-- | 1 |
|  | US - A - 3 973 770 (MONTEN BRUCK)<br><br>* Colonne 7, lignes 58-68; colonne 8, lignes 1-16; figures 10,11 *<br><br>---- | 3 |

**DOCUMENTS CONSIDERES COMME PERTINENTS**

**CLASSEMENT DE LA DEMANDE (Int. Cl.³)**

B 65 G 15/58
17/46

**DOMAINES TECHNIQUES RECHERCHES (Int. Cl.³)**

B 65 G
B 65 H

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-05-1981 | OSTLIN |

OEB Form 1503.1 06.78